(19) Europäisches Patentamt
European Patent Office
Office européen des brevets

(11) **EP 2 256 503 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*G01P 3/44* (2006.01)     *G01P 3/36* (2006.01)
*G01C 19/72* (2006.01)

(21) Anmeldenummer: **09161019.6**

(22) Anmeldetag: **25.05.2009**

(54) **Drehzahlgeber**

Rotational speed sensor

Capteur de vitesse de rotation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**01.12.2010 Patentblatt 2010/48**

(73) Patentinhaber: **SICK STEGMANN GmbH**
**78166 Donaueschingen (DE)**

(72) Erfinder: **Siraky, Josef**
**78166, Donaueschingen (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**EP-A- 0 007 827     EP-A- 0 112 143**
**EP-A- 0 259 509     US-A1- 2009 059 238**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Sensor zur Bestimmung der Drehzahl einer Welle.

Die Regelung der Drehzahl von Elektromotoren wird in der Regel mit einem Tachometer in der Regelschleife für den Betrieb des Elektromotors vorgenommen. Solche Tachometer, auch Drehzahlmesser genannt, waren in der Vergangenheit bürstenbehaftete Generatoren, deren Ausgangsspannung proportional zur Drehzahl ist. Mit Einzug der digitalen Drehzahlregelung wurde die Drehzahlermittlung über die Ableitung der Position über die Zeit vorgenommen. Solche digitalen Drehzahlmesser benutzen als Ausgangsgröße die relative Position der Welle, wobei die Auflösung sehr hoch ist. Die Ableitung der Position innerhalb eines Reglertaktes, der heute mittlerweile bei ca. 32 $\mu$s liegt, erfordert immer präzisere Positionsgeber. Heutzutage beträgt die Gesamtauflösung pro Umdrehung deshalb bis zu 24 Bit, also ca. 16 Millionen Teilungen pro Umdrehung.

Nachteilig daran ist, dass nicht mehr die Drehzahl direkt gemessen wird, sondern diese durch Umrechnung über die Ableitung der Position ermittelt wird. Deshalb werden immer höhere Auflösungen benötigt, die ihrerseits sehr hohe Positionsfrequenzen bedingen, die in der Praxis nicht mehr anwendbar sind.

Aus der US 2009/059238 A1 ist ein faseroptisches Gyroskop bekannt, das einen stationären Teil umfasst mit einer Laserlichtquelle, einem Lichtdetektor und einem optischen Koppler zum Ein- und Auskoppeln des Lichts in und aus einem Faserkreisel, der rotiert und dessen Rotation mit dem Sagnac-Effekt gemessen werden kann.

Ausgehend von diesem Stand der Technik ist es Aufgabe der Erfindung einen verbesserten Sensor zur Bestimmung der Drehzahl einer Welle bereitzustellen, mit dem die vorgenannten Nachteile vermieden werden können und der somit möglichst eine direkte Messung der Drehzahl ermöglicht und zwar mit hoher Genauigkeit und der gleichzeitig kostenmäßig mit den bisherigen Systemen konkurrieren kann.

Die Aufgabe wird gelöst durch einen Sensor mit den Merkmalen des Anspruchs 1.

Der erfindungsgemäße Sensor zur Bestimmung der Drehzahl einer Welle weist einen stationären Teil und einen mit der Welle mitrotierenden Teil auf. Der stationäre Teil umfasst eine Laserlichtquelle, einen ersten optischen Koppler, einen optischen Detektor und eine Auswerteeinheit, die aus den Detektorsignalen die Drehzahl ermittelt. Der mitrotierende Teil weist eine Lichtleiterspule auf, die mit der Welle verdrehfest verbunden und konzentrisch zur Welle gewickelt ist. In die beiden Enden der Lichtleiterspule wird das Licht der Laserlichtquelle in geeigneter Weise eingekoppelt, so dass zwei Lichtanteile in der Lichtleiterspule gegensätzlich umlaufen. Bei Drehung der Welle und damit der Lichtleiterspule tritt aufgrund des Sagnac-Effektes zwischen den beiden Lichtanteilen eine Phasenverschiebung auf.

Die beiden Lichtanteile sind aus dem Ende der Lichtleiterspule auskoppelbar zur Überlagerung auf dem Detektor. Aufgrund der Phasenverschiebung in Abhängigkeit der Drehzahl tritt eine von der Drehzahl abhängige Interferenz auf dem Detektor auf, so dass in der Auswerteeinheit mit den Detektorsignalen die Drehzahl ermittelt werden kann.

Die wesentlichen Vorteile des erfindungsgemäßen Sensors bestehen darin, dass die Drehzahl direkt als Ausgangsgröße vorliegt und der Sensor keine bewegten Teile aufweist und deshalb absolut verschleißfrei ist, weshalb er besonders geeignet ist für den Einsatz in Servomotoren. Die Drehgeschwindigkeit wird berührungslos direkt gemessen. Es ergeben sich extrem kurze Reaktionszeiten. Die Auflösung, Messgenauigkeit und Lebensdauer sind sehr hoch. Der Sensor hat ein geringes Gewicht und kann kompakt ausgebildet werden. Des Weiteren kann der Sensor preislich mit den bestehenden Drehzahlgebern konkurrieren, wobei darüber hinaus die Güte des Drehzahlsignals um ein Vielfaches verbessert ist. Weiter ist über die Lichtleiterspulengröße, also über die Lichtleiterlänge und auch über die Wellenlänge die Empfindlichkeit des erfindungsgemäßen Sensors skalierbar.

Da jegliche Drehung der Spule, also auch die Erddrehung oder auch die Drehung des gesamten Motorgehäuses, ein entsprechendes Messsignal erzeugt, ist eine stationäre Referenzlichtleiterspule vorgesehen, in die ebenfalls das Licht der gleichen Laserlichtquelle oder einer Referenzlaserlichtquelle zum Erhalt gegensinnig umlaufender Lichtanteile einkoppelbar ist. Diese Lichtanteile werden in analoger Weise auf einem Referenzdetektor überlagert detektiert, so dass mit der stationären Referenzlichtleiterspule und dem Referenzdetektor dann die genannten "äußeren" Drehungen erfasst werden können und von der Auswerteeinheit bei der Ermittlung der Drehzahl der Motorwelle als Korrekturwerte berücksichtigt werden.

Vorteilhafterweise ist das Licht der Laserlichtquelle mittels eines zweiten Kopplers in die Lichtleiterspule einkoppelbar bzw. aus dieser auskoppelbar. Ein derartiges Ein- bzw. Auskoppeln ist grundsätzlich bereits aus der US 5,099,690 bekannt. Dieser zweite Koppler kann entweder stationär angeordnet sein oder mit der Welle verdrehfest verbunden sein. Wenn der zweite Koppler mit der Welle verdrehfest verbunden ist, könnte er in einer Weiterbildung der Erfindung als Y-Lichtleiteranschlussstück ausgebildet sein, um das Licht in die beiden Enden der Lichtleiterspule einzukoppeln bzw. das Licht aus den beiden Enden der Lichtleiterspule auszukoppeln und auf einen gemeinsamen optischen Weg zum Detektor zu vereinen.

In einer alternativen Ausführungsform könnte der zweite Koppler auch mit seinem der Lichtquelle zugewandten Ende koaxial ausgebildet sein, wobei der Innenleiter mit dem einen Ende der Lichtleiterspule und der Außenleiter mit dem anderen Ende optisch verbunden ist.

Vorteilhafterweise ist der erste Koppler in einfacher Weise als halbdurchlässiger Spiegel ausgebildet.

Der Lichtleiter kann vorzugsweise als Lichtleitfaser ausgebildet sein und besonders bevorzugt als Monomodenfaser. Darüber hinaus ist auch eine Ausbildung des Lichtleiters in Form eines integrierten Optik Wellenleiters möglich. In diesem Falle ist die Licht führende Spule durch einen als Resonator dienenden ringförmigen Wellenleiter ersetzt, mit mindestens einem optischen Input/Output Kopplungsstück. Der ringförmige Wellenleiter, Koppler sowie der Input/Ouput Wellenleiter kann durch photolithographische Prozesse gefolgt von "lowcost" planaren Batch-Prozessen, wie dem Ionenaustausch in einem Glassubstrat oder dem Ätzen einer dielektrischen Schicht, welche auf einem optischen Substrat, welches einen niedrigeren Brechungsindex als die dielektrische Schicht hat, hergestellt werden. Das optische Substrat kann Quarzglas (fused silica) oder auch thermisch gewachsenes Silizium auf einem mechanischem Substrat aus zum Beispiel Einkristall Silizium sein.

In einer konstruktionsmäßig vorteilhaften Ausgestaltung der Erfindung ist ein Adapterstück vorgesehen, dass mit der Welle verdrehfest verbunden ist, wobei das Adapterstück zur Aufnahme der Lichtleiterspule dient. So kann beispielsweise eine Lichtleiterspule mit relativ großem Radius auf eine Welle mit kleinem Durchmesser aufgebracht werden oder allgemein, der Radius des Adapterstückes dem möglichen Biegeradius des Lichtleiters angepasst sein. Des Weiteren kann der Adapter dafür ausgelegt sein, in geeigneter Weise die Enden der Lichtleiterspule zur Stirnseite hin zu führen. Die Welle des Elektromotors muss dann keine besondere Ausgestaltung aufweisen.

Des Weiteren kann in das Adapterstück der zweite Koppler integriert sein.

Alternativ wäre es auch denkbar, dass der Lichtleiter ohne ein Adapterstück direkt auf die Welle gewikkelt ist.

Des Weiteren betrifft die Erfindung den Einsatz eines solchen Sensors in einem Elektromotor, also einen Elektromotor mit einem erfindungsgemäßen Sensor zur Ermittlung und Regelung der Drehzahl des Elektromotors.

Im Folgenden wird die Erfindung anhand von Ausführungsbeispielen unter Bezugnahme auf die Zeichnung im Einzelnen erläutert. In der Zeichnung zeigen:

Fig. 1    eine stark schematisch vereinfachte Darstellung eines Elektromotors mit einem Sensor;

Fig. 2    eine schematische Darstellung einer Ausführungsform einer Lichtleiterspule mit Koppler des erfindungsgemäßen Sensors;

Fig. 3    eine weitere Ausführungsform des Kopplers;

Fig. 4    eine Darstellung wie Fig. 1 einer Ausführungsform.

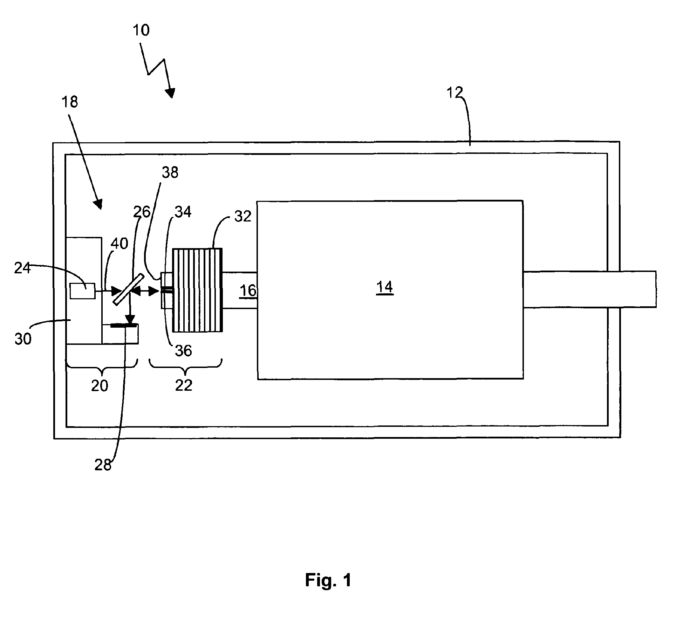

Ein in Fig. 1 dargestellter Elektromotor 10 weist ein Gehäuse 12 auf sowie einen Rotor 14 und eine mit dem Rotor angetriebene Rotorwelle 16. Elektronische Einzelheiten des Elektromotors 10, wie beispielsweise Antrieb und Regelung oder dergleichen, sind nicht dargestellt, da sie für die Erfindung unerheblich sind. Die Erfindung betrifft nämlich insbesondere einen ebenfalls in dem Gehäuse 12 angeordneten Sensor 18, mit dem die Drehzahl der Motorwelle 16 bestimmbar ist.

Der Sensor 18 besteht aus einem stationären Teil 20 und einem mit der Welle 16 mitrotierenden Teil 22. Der stationäre Teil 20 umfasst eine Laserlichtquelle 24, einen ersten optischen Koppler 26, einen optischen Detektor 28 und eine Auswerteinheit 30. Der rotierende Teil 22 umfasst eine Lichtleiterspule 32, die verdrehfest mit der Welle 16 verbunden ist und konzentrisch zur Welle 16 gewickelt ist. Die Enden 34 und 36 der Lichtleiterspule 32 sind zentral zur Stirnseite 38 der Welle 16 hin geführt.

Die Laserlichtquelle 24 sendet in Längsrichtung der Welle 16 einen Lichtstrahl 40 aus, der den ersten optischen Koppler 26, der bevorzugt als halbdurchlässiger Spiegel ausgebildet ist, durchsetzt und in die beiden Enden 34 und 36 der Lichtleiterspule 31 eingekoppelt wird. Die so in die Enden 34 bzw. 36 eingekoppelten Lichtanteile durchlaufen in gegensätzlicher Richtung die Lichtleiterspule 32 und treten am jeweils anderen Ende 36 bzw. 34 wieder aus der Lichtleiterspule 32 aus in Richtung auf den halbdurchlässigen Spiegel 26, also auf derselben optischen Achse wie das Sendelicht aber in entgegengesetzter Richtung. Vom halbdurchlässigen Spiegel 26 werden die beiden Lichtanteile im dargestellten Ausführungsbeispiel um 90° in Richtung auf den Detektor 28 umgelenkt.

Bei Stillstand der Motorwelle 16 und damit der Lichtleiterspule 32 ist für beide Lichtanteile der zurückgelegte optische Weg gleich lang, so dass auf den Detektor 28 bei Überlagerung der beiden Lichtanteile eine bestimmte Intensität gemessen wird. Dreht sich jedoch die Motorwelle 16 und damit die Lichtleiterspule 32 tritt aufgrund des Sagnac-Effektes eine Phasenverschiebung zwischen diesen beiden Lichtanteilen auf, gemäß der Formel:

$$\Delta\Phi = \frac{4\pi LR}{\lambda c}\Omega$$

mit

$\Delta\Phi$    Phasenverschiebung
L    Länge des Lichtleiters in der Lichtleiterspule
R    Radius der Lichtleiterspule
$\lambda$    Lichtwellenlänge

c     Lichtgeschwindigkeit

Ω     Winkelgeschwindigkeit der Lichtleiterspule/Welle 16

Diese Phasenverschiebung führt bei Überlagerung der Lichtanteile auf dem Detektor 28 zu einer von der Drehzahl abhängigen Interferenz.

Die Intensität auf dem Detektor 28 wird über Detektorsignale an die Auswerteeinheit 30 übermittelt. In der Auswerteeinheit 30 wird aus der gemessenen Intensität, also aus den Detektorsignalen, schließlich die Drehzahl der Motorwelle 16 ermittelt. Die Drehzahl kann zur Drehzahlregelung des Elektromotors 12 verwendet werden und/oder nach außen gegeben werden.

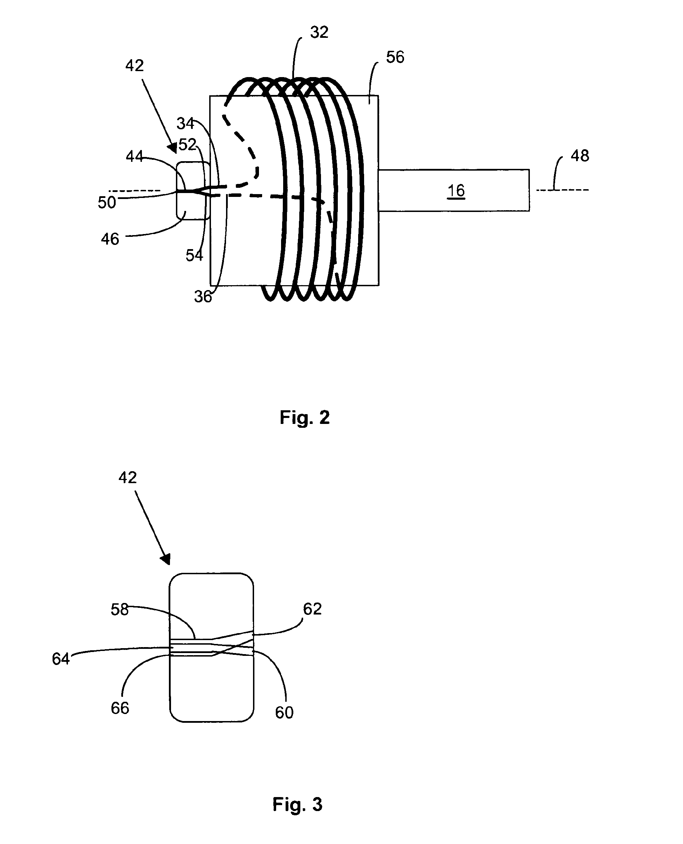

Damit der Sensor 18 so funktioniert, muss sichergestellt sein, dass das Sendelicht 40 bei Drehung der Motorwelle 16 in jeder Winkelstellung in die beiden Enden 34 und 36 der Lichtleiterspule 32 eingekoppelt wird. Dazu ist bevorzugt ein zweiter Koppler 42 vorgesehen, der entweder stationär angeordnet sein kann oder bevorzugt verdrehfest mit der Welle 16 verbunden ist. Ein Ausführungsbeispiel des zweiten Körpers 42 ist in Fig. 2 dargestellt, bei dem der Koppler 42 als Y-Lichtleiteranschlussstück 44 ausgebildet ist, das in einem Montagekörper 46 zur verdrehfesten Verbindung mit der Welle 16 vorgesehen ist. Auf diese Weise kann das Sendelicht 40 in das auf der Drehachse 48 und in Richtung des stationären Teils 20 gelegene Ende 50 des Y-Lichtleiteranschlussstücks 44 eingestrahlt werden, wobei sichergestellt ist, dass das Sendelicht 40 zu gleichen Teilen über die beiden anderen Enden 52 und 54 des Y-Lichtleiteranschlussstücks 44 in die Enden 34 und 36 der Lichtleiterspule 32 zu jeder Winkelstellung der Motorwelle 16 eingekoppelt wird.

Um die Lichtleiterspule 32 in einfacher Weise mit der Welle 16 verbinden zu können, ist die Lichtleiterspule 32 auf ein Adapterstück 56 aufgewickelt, das mit der Welle 16 verdrehfest verbindbar ist, beispielsweise aufgesteckt werden kann. Das Adapterstück 56 ist auch deswegen vorteilhaft, weil Lichtleiter nicht in jedem beliebigen Winkel gebogen werden können, so dass der Durchmesser des Adapterstücks 56 an den möglichen Biegeradius des Lichtleiters für die Lichtleiterspule 32 angepasst werden kann. Dies gilt besonders dann, wenn der Lichtleiter vorzugsweise als Lichtleitfaser und besonders bevorzugt als Monomodenfaser ausgebildet ist.

Vorteilhaft wäre es auch, wenn das Adapterstück 56 und der zweite Koppler 42 eine integrale Komponente bilden.

Weitere Ausgestaltungen des zweiten Kopplers 42 sind denkbar, beispielsweise könnte der zweite Koppler 42 ein Lichtleiterelement 58 aufweisen, das an einem dem stationären Teil 20 zugewandten Ende koaxial ausgebildet ist, und an seinem anderen Ende zwei getrennte Enden 60 und 62 aufweist, wobei das eine Ende 60 mit dem Innenleiter 64 des Koaxiallichtleiters optisch verbunden ist und das andere Ende 62 mit dem äußeren Leiter der Koaxialleitung.

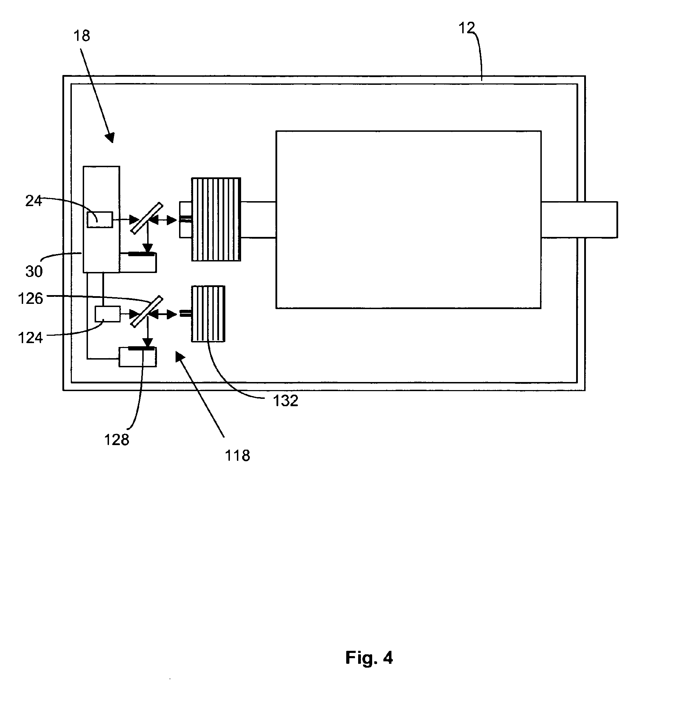

In Weiterbildung der Erfindung ist gemäß einem Ausführungsbeispiel nach Fig. 4 zusätzlich zu dem Sensor 18 ein Referenzsensor 118 vorgesehen, der analog aufgebaut ist wie der Sensor 18. Der Referenzsensor 118 weist also eine Referenzlaserlichtquelle 124, einen ersten Referenzlichtkoppler 126, eine Referenzlichtleiterspule 132 und einen Referenzdetektor 128 auf. Allerdings ist die Referenzlichtleiterspule 132 jetzt ebenfalls stationär im Gehäuse 12 angeordnet. Somit kann der Referenzsensor 118 sämtliche Drehungen des gesamten Elektromotors mit Gehäuse erfassen, die prinzipiell vom Sensor 18 auch erfasst werden, aber vom Sensor 18 alleine nicht von Rotationen der Welle 16 unterschieden werden können. Auf diese Weise kann in der Auswerteeinheit 30 die Drehzahl der Welle 16 unter Berücksichtigung der Referenzdetektorsignale ermittelt werden, so dass die Drehzahl genauer bestimmt werden kann und äußere Drehungen dabei berücksichtigt, also eliminiert, werden.

## Patentansprüche

1. Sensor zur Bestimmung der Drehzahl einer Welle (16) mit einem stationären Teil (20) und einem mit der Welle (16) mitrotierenden Teil (22), wobei der stationäre Teil (20) eine Laserlichtquelle (24), einen ersten optischen Koppler (26), einen optischen Detektor (28) und eine Auswerteeinheit (30), die dazu ausgebildet ist, aus den die Drehzahl Detektorsignalen zu ermitteln aufweist und der rotierende Teil (22) eine Lichtleiterspule (32) aufweist, die mit der Welle (16) verdrehfest verbunden und konzentrisch zur Welle (16) gewickelt ist und die Enden (34 und 36) der Lichtleiterspule (32) zu einer Stirnseite geführt sind, so dass einerseits das Licht (40) der Lichtquelle (24) in beide Enden (34 und 36) einkoppelbar ist und zwei Lichtanteile in der Lichtleiterspule (32) gegensätzlich umlaufen und andererseits die Lichtanteile aus den beiden Enden (34 und 36) auskoppelbar sind zur Überlagerung der Lichtanteile auf dem Detektor (28), so dass bei Drehung der Welle (16) unter Ausnutzung des Sagnac-Effektes aus der von der Drehzahl abhängigen Phasenverschiebung der beiden gegensätzlich umlaufenden Lichtanteile die Detektorsignale detektierbar sind wobei eine stationäre Referenzlichtleiterspule (132) vorgesehen ist, in die ebenfalls Licht zum Erhalt gegensinnig umlaufender Lichtanteile einkoppelbar ist und diese Lichtanteile auf einem Referenzdetektor (128) überlagert detektierbar sind, so dass die Auswerteeinheit (30) die Drehzahl unter Berücksichtigung der Referenzdetektorsignale ermitteln kann.

2. Sensor nach Anspruch 1, **dadurch gekennzeichnet, dass** das Licht mittels eines zweiten Kopplers (42) in die bzw. aus der Spule ein- bzw. auskoppelbar ist.

3. Sensor nach Anspruch 2, **dadurch gekennzeichnet, dass** der zweite Koppler stationär angeordnet ist.

4. Sensor nach Anspruch 2, **dadurch gekennzeichnet, dass** der zweite Koppler (42) mit der Welle verdrehfest verbunden ist.

5. Sensor nach Anspruch 4, **dadurch gekennzeichnet, dass** der zweite Koppler (42) als Y-Lichtleiteranschlussstück (44) ausgebildet ist.

6. Sensor nach Anspruch 4, **dadurch gekennzeichnet, dass** der zweite Koppler (42) an seinem der Lichtquelle (24) zugewandten Ende koaxial ausgebildet ist und der Innenleiter (64) mit dem einen Ende der Lichtleiterspule (32) und der Außenleiter (66) mit dem anderen Ende optisch verbunden ist.

7. Sensor nach einem der vorhergehenden Ansprüche, **dadurch gekennzeichnet, dass** der erste Koppler (26) als halbdurchlässiger Spiegel ausgebildet ist.

8. Sensor nach einem der vorhergehenden Ansprüche, **dadurch gekennzeichnet, dass** der Lichtleiter als Lichtleitfaser ausgebildet ist.

9. Sensor nach Anspruch 8, **dadurch gekennzeichnet, dass** die Lichtleitfaser eine Monomodenfaser ist.

10. Sensor nach einem der vorhergehenden Ansprüche, **dadurch gekennzeichnet, dass** der Lichtleiter zur Bildung der Lichtleiterspule (32) auf ein Adapterstück (56) aufgewickelt ist, das mit der Welle (16) verdrehfest verbunden, insbesondere aufgesteckt, ist.

11. Sensor nach Anspruch 10, **dadurch gekennzeichnet, dass** das Adapterstück (56) den zweiten Koppler (42) umfasst.

12. Sensor nach einem der vorhergehenden Ansprüche 1 bis 9, **dadurch gekennzeichnet, dass** der Lichtleiter auf die Welle gewickelt ist.

13. Sensor nach einem der vorhergehenden Ansprüche, wobei der Sensor Teil einer Drehzahlregelung eines Elektromotors ist.

14. Elektromotor mit einem Sensor nach einem der vorhergehenden Ansprüche zur Ermittlung und Regelung der Drehzahl.

**Claims**

1. Sensor for determining the rotational speed of a shaft (16) having a stationary part (20) and a rotating part (22) rotating with the shaft, wherein the stationary part (20) comprises a laser light source (24), a first optical coupler (26 ), an optical detector (28) and an evaluation unit (30) which is designed to determine the rotational speed from the detector signals and the rotating part (22) comprises a optical waveguide coil (32) which is fixedly connected to the shaft (16) and is wound concentrically to the shaft (16) and the ends (34 and 36) of the optical waveguide coil are guided (32) to a front side, so that on the one hand, the light (40) of the light source (24) can be coupled into both ends (34 and 36) and two components of the light circulate in opposite direction in the optical waveguide coil (32) and on the other hand, the light components can be coupled out from the two ends (34 and 36) for superposition of the light components at the detector (28), so that upon rotation of the shaft (16) by utilizing the Sagnac effect the detector signals can be detected from the phase shift of the two oppositely rotating light components and depending on the rotational speed, whereby a stationary reference optical waveguide coil (132) is provided, in which light can be coupled to also obtain oppositely circulating light components and the light components are detectable in superposition on a reference detector (128), so that the evaluation unit (30) can determine the rotational speed by taking the reference detector signals into account.

2. Sensor according to claim 1, **characterized in that** the light can be coupled into or out of the coil by means of a second coupler (42).

3. Sensor according to claim 2, **characterized in that** the second coupler is arranged stationarily.

4. Sensor according to claim 2, **characterized in that** the second coupler (42) is connected to the shaft rigidly.

5. Sensor according to claim 4, **characterized in that** the second coupler (42) is formed as a Y-fiber connector (44).

6. Sensor according to claim 4, **characterized in that** the second coupler (42) is formed coaxially at its end facing the light source (24) and the inner waveguide (64) is optically connected with one end of the optical waveguide coil (32) and the outer waveguide (66) is optically connected with the other end.

7. Sensor according to one of the preceding claims, **characterized in that** the first coupler (26) is formed as a semi-transparent mirror.

8. Sensor according to one of the preceding claims, **characterized in that** the optical waveguide is formed as an optical fiber.

9. Sensor according to claim 8, **characterized in that** the optical fiber is a single mode fiber.

10. Sensor according to one of the preceding claims, **characterized in that** the optical waveguide is wound on an adapter piece (56) for forming the optical fiber coil (32) which adapter piece is connected fixedly to the shaft (16), in particular plugged in.

11. Sensor according to claim 10, **characterized in that** said adapter piece (56) comprises the second coupler (42).

12. Sensor according to one of the preceding claims 1 to 9, **characterized in that** the optical waveguide is wound onto the shaft.

13. Sensor according to one of the preceding claims, wherein the sensor is part of a speed control of an electric motor.

14. Electric motor having a sensor according to one of the preceding claims for the detection and control of the speed.

**Revendications**

1. Capteur pour déterminer la vitesse de rotation d'un arbre (16) avec une partie fixe (20) et une partie rotative (22) tournant avec l'arbre, dans lequel la partie fixe (20) comprend une source de lumière laser (24), un premier coupleur optique (26), un détecteur optique (28) et une unité d'évaluation (30) qui est conçue pour déterminer la vitesse de rotation à partir des signaux de détecteur et la partie rotative (22) comprend une bobine de conduit de lumière (32) qui est reliée de manière fixe à l'arbre (16) et est enroulée de manière concentrique à l'arbre (16) et les extrémités (34 et 36) de la bobine de conduit de lumière (32) sont guidés vers un front de telle sorte que, d'une part, la lumière (40) de la source de lumière (24) peut être couplée dans les deux extrémités (34 et 36) et que deux composants de lumière circulent en sens inverse dans la bobine de conduit de lumière (32) et, d'autre part, les composants de lumière peuvent être couplés hors des deux extrémités (34 et 36) pour la superposition des composants de lumière au niveau du détecteur (28), de sorte que lors de la rotation de l'arbre (16) en utilisant l'effet Sagnac, les signaux de détection peuvent être détectés à partir du déphasage des deux composants de lumière en sens inverse dépendant de la vitesse de rotation, et une bobine de référence fixe de conduit de lumière (132) est prévue, dans laquelle la lumière peut être également couplée pour obtenir des composants de lumière circulant en sens inverse et les composants de lumière sont détectables superposés sur un détecteur de référence (128), de sorte que l'unité d'évaluation (30) peut déterminer la vitesse de rotation en prenant en compte les signaux de détection de référence.

2. Capteur selon la revendication 1, **caractérisé en ce que** la lumière peut être couplée dans ou hors de la bobine au moyen d'un second coupleur (42).

3. Capteur selon la revendication 2, **caractérisé en ce que** le second coupleur est disposé de manière fixe.

4. Capteur selon la revendication 2, **caractérisé en ce que** le deuxième coupleur (42) est relié rigidement à l'arbre.

5. Capteur selon la revendication 4, **caractérisé en ce que** le deuxième coupleur (42) est réalisé en forme d'un raccord en Y de conduit de lumière (44).

6. Capteur selon la revendication 4, **caractérisé en ce que** le deuxième coupleur (42) est formé de manière coaxiale sur son extrémité tourné vers la source de lumière (24) et le conduit de lumière intérieur (64) est relié optiquement à une extrémité de la bobine de conduit de lumière (32) et le conduit de lumière extérieur (66) est relié optiquement à l'autre extrémité.

7. Capteur selon l'une des revendications précédentes, **caractérisé en ce que** le premier coupleur (26) est réalisé en forme d'un miroir semi-transparent.

8. Capteur selon l'une des revendications précédentes, **caractérisé en ce que** le conduit de lumière est formé comme une fibre optique.

9. Capteur selon la revendication 8, **caractérisé en ce que** la fibre optique est une fibre monomode.

10. Capteur selon l'une des revendications précédentes, **caractérisé en ce que** le conduit de lumière est enroulé sur une pièce d'adaptation (56) pour former la bobine de conduit de lumière (32) et la pièce d'adaptation est connectée de manière fixe à l'arbre (16), en particulier enfiché dans l'arbre.

11. Capteur selon la revendication 10, **caractérisé en ce que** la pièce d'adaptation (56) comprend le second coupleur (42).

12. Capteur selon l'une des revendications précédentes 1 à 9, **caractérisé en ce que** conduit de lumière est enroulé sur l'arbre.

13. Capteur selon l'une des revendications précédentes, dans lequel le capteur fait partie d'une commande de vitesse d'un moteur électrique.

14. Moteur électrique avec un capteur selon l'une des revendications précédentes pour la détection et le contrôle de la vitesse.

EP 2 256 503 B1

**Fig. 1**

8

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009059238 A1

- US 5099690 A